# EUROPEAN PATENT APPLICATION

(11) **EP 1 527 837 A1**
(43) Date of publication of application: **04.05.2005**
(21) Application number: 04256723.0
(22) Date of filing: 29.10.2004
(51) Int. Cl.: B23D 49/16, B23D 51/02

(54) **Adjustable guide plate for reciprocating saw**

(30) Priority: 31.10.2003 CN 200320110603
(71) Applicant: Positec Power Tools (Suzhou) Co., Ltd., Suzhou 215006 (CN)
(72) Inventor: Shiping, Jlao, Suzhou 215006 (CN)
(74) Representative: Stuttard, Garry Philip

(57) **Abstract**

A power saw which includes a clam shell housing (1), a gear box (2) disposed in the clam shell housing (1), a saw blade (3) attached to the gear box (2) for reciprocative movement and a guide plate (4). The power saw includes a guide shoe (5) which itself includes a support plate (6) pivotally connected to the guide plate (4), a bracket assembly (7) fixed relative to the gear box (2) and a push plate (8) arranged slidably with respect to the bracket assembly (7). A slide pin (9) and a resilient member (10) are disposed between the bracket assembly (7) and the push plate (8). The support plate (6) defines a plurality of slide notches. The push plate (8) defines a receiving slot (20). The slide pin (9) extends through the receiving slot (20). The guide shoe (5) has a first working state and a second working state. When the guide shoe (5) is in the first working state, the slide pin (9) is received in the receiving slot (20) and a slide notch (12) at the same time. When the guide shoe is in the second working state, the slide pin is disengaged from the slide notch (12).

## Description

The present invention relates to a power saw having a guide shoe.

Commonly a power saw (such as a reciprocating saw) includes a guide plate and a guide shoe. The guide plate is used for positioning a saw blade with respect to a workpiece. The guide shoe is used for adjusting the position of the guide plate relative to the saw blade so as to make the saw blade conveniently cut the workpiece and to prolong the life of the saw blade.

Certain conventional power saws have a guide plate and a support plate pivotally connected to the guide plate. The support plate includes a bolt hole and is fixed to the guide plate via a bolt engaged with the bolt hole. Thus an auxiliary tool must be provided to adjust the guide plate (*ie* a screw tool) which makes adjustment very time consuming and increases manufacturing costs.

The present invention seeks to overcome certain disadvantages of existing power saws by providing a manually adjustable guide shoe and guide plate.

Thus viewed from one aspect the present invention provides a power saw comprising;
a clam shell housing,
a gear box disposed in the clam shell housing,
a saw blade attached to the gear box for axially reciprocative movement,
a guide plate for guiding the saw blade and
a guide shoe including:
   a bracket assembly fixed relative to the gear box,
   a support plate which is partially nested within the bracket assembly and which is pivotally connected to the guide plate, the support plate defining axially a plurality of slide notches,
   a push plate slidably disposed between the support plate and the bracket assembly, the push plate defining a receiving slot,
   a slide pin extending through the receiving slot, the slide pin being selectively engageable with the plurality of slide notches and
   a resilient member disposed between the bracket assembly and the push plate,
      wherein the guide shoe has a first working state in which the slide pin is received in the receiving slot and a first of the slide notches so that the guide plate is immovable with respect to the saw blade and a second working state in which the slide pin is disengaged from the first of the slide notches and the guide plate is moveable with respect to the saw blade.

In an embodiment, the power saw includes a clam shell housing, a gear box disposed in the clam shell housing, a saw blade attached to the gear box for reciprocative movement and a guide plate. The power saw includes a guide shoe which itself includes a support plate pivotally connected to the guide plate, a bracket assembly fixed relative to the gear box and a push plate arranged slidably with respect to the bracket assembly. A slide pin and a resilient member are disposed between the bracket assembly and the push plate. The support plate defines a plurality of slide notches. The push plate defines a receiving slot. The slide pin extends through the receiving slot. The guide shoe has a first working state and a second working state. When the guide shoe is in the first working state, the slide pin is received in the receiving slot and the slide slot at the same time. When the guide shoe is in the second working state, the slide pin withdraws from the slide notch.

By virtue of the guide shoe of the present invention, the push plate is directly operable to advantageously adjust the guide plate conveniently and without an auxiliary tool.

Preferably the bracket assembly includes a fixed bracket and a bar member. Particularly preferably the power saw further comprises a joining member for fixing the fixed bracket to the gear box, wherein the fixed bracket defines a first slot elongated in a direction perpendicular to a direction of the reciprocative movement of the saw blade and the bar member defines a second slot elongated in a direction perpendicular to a direction of the reciprocative movement of the saw blade, wherein the first end and second end of the slide pin are mounted in the first slot and the second slot respectively whereby to be slidable only in the direction perpendicular to the direction of the reciprocating movement of the blade.

Preferably an arcuate face is formed in the slide slot and a central angle corresponding to the arcuate face is less than 180 degrees.

Preferably the support plate defines an elongate slot in communication with each slide notch. The elongate slot may extend from the second end of the support plate and may be open-ended (*ie* a substantially U-shaped slot).

Preferably the receiving slot includes a first receiving portion and a second receiving portion in communication with the first receiving portion, wherein the length of the first receiving portion in the direction of movement of the slide pin is greater than the diameter of the slide pin and the length of the second receiving portion in the direction of movement of the slide pin is substantial equal to the diameter of the slide pin.

Preferably an arcuate pushing face is formed in the first receiving portion and a central angle corresponding to the arcuate pushing face is less than 180 degrees.

Preferably in the first working state the slide pin is latched into the second receiving portion of the receiving slot and the slide notch at the same time.

Preferably the length of the first receiving portion in the direction of movement of the slide pin is larger than the sum of the diameter of the slide pin plus the depth of the slide notch.

Preferably in the second working state the slide pin is located on a joining face between adjacent slide notches.

A plurality of adjacent slide notches are formed along an inner edge of the elongate slot.

The guide plate is typically positioned exteriorly to the housing. The guide shoe is typically positioned interiorly to the housing.

The present invention will now be described in a non-limitative sense with reference to the accompanying Figures in which:
Figure 1 is an exploded partial perspective view of an embodiment of the power saw of the invention;
Figure 2 is a planar view of the assembled elements of Figure 1;
Figure 3 is a cross sectional view of Figure 2;
Figure 4 is an exploded perspective view of a guide shoe of an embodiment of the power saw of the invention;
Figure 5 is a perspective view of the assembled guide shoe of Figure 4;
Figure 6 is a top view of Figure 5;
Figure 7 is a cross sectional view along A-A line of Figure 6;
Figure 8 is a top view of the guide shoe of the present invention in a first position during adjustment;
Figure 9 is a top view of the guide shoe of the present invention in a second position during adjustment;
Figure 10 is a top view of the guide shoe of the present invention in a third position during adjustment;
Figure 11 is a top view of the guide shoe of the present invention in a fourth position during adjustment;
Figure 12 is a top view of the guide shoe of the present invention in a fifth position during adjustment; and
Figure 13 is a top view of the guide shoe of the present invention after adjustment is complete.

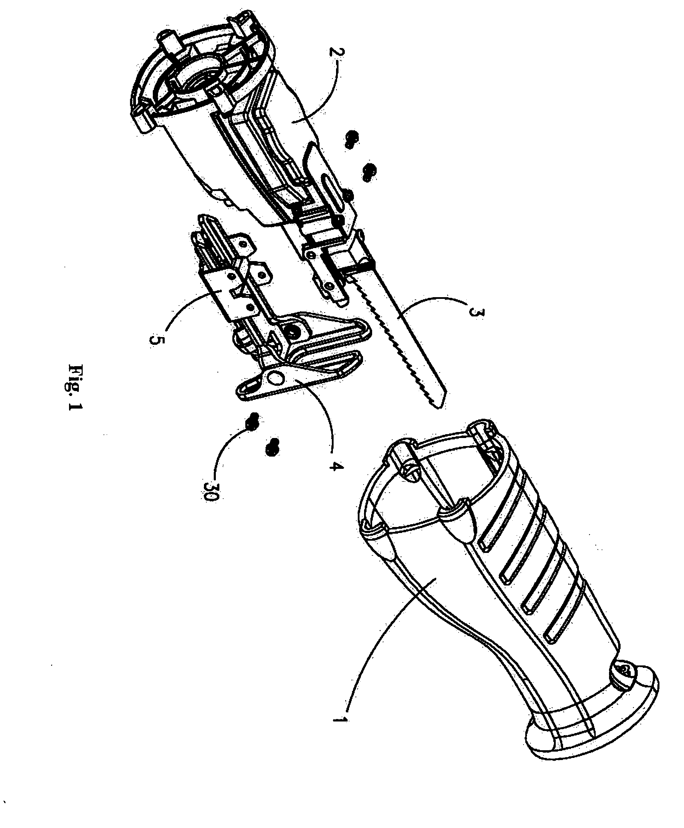

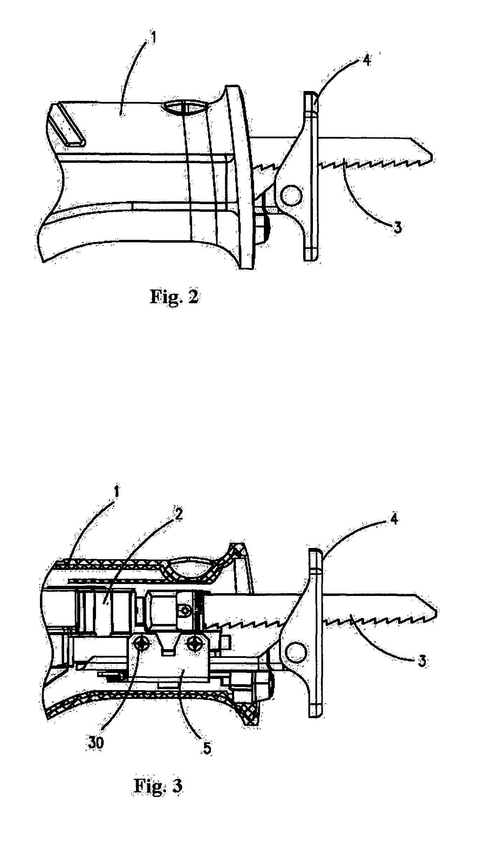

Referring to Figures 1 to 3, a power saw includes a clam shell housing 1 and a gear box 2 disposed in the clam shell housing 1. A saw blade 3 extending beyond the clam shell housing 1 is attached to the gear box 2 and is reciprocatively driven by a motor (not shown) for cutting a workpiece. A guide shoe 5 mounted on the gear box 2 within the clam shell housing 1 is pivotally connected to an exterior guide plate 4.

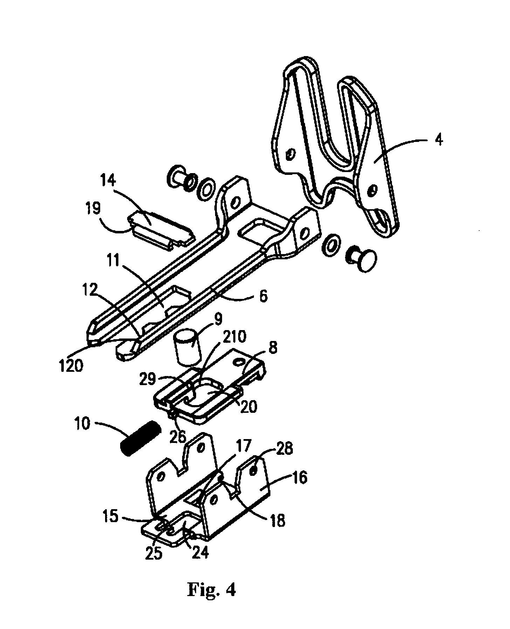

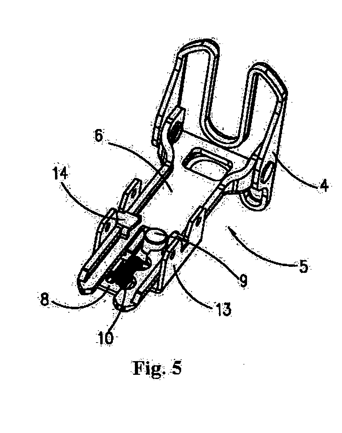

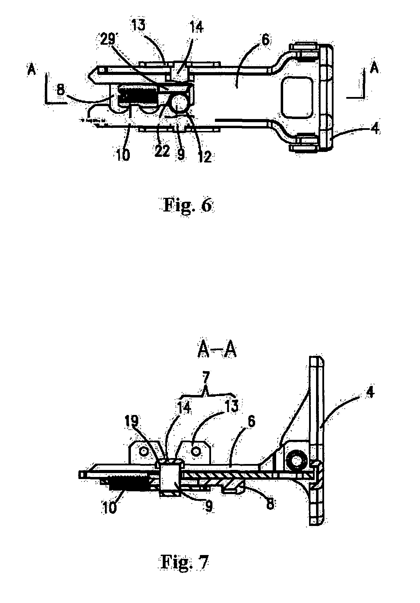

Referring to Figures 4 to 7, the guide shoe 5 includes a support plate 6 which is pivotally connected at its first end to the guide plate 4 and which is partially nested near to its second end within a bracket assembly 7. A push plate 8 is slidably disposed between the support plate 6 and the bracket assembly 7. Extending from the second end of the support plate 6 is an elongate slot 11 which is open-ended (*ie* a substantially U-shaped slot). A plurality of adjacent slide notches 12 are formed along an inner edge of the elongate slot 11. Each of the slide notches 12 communicates with the elongate slot 11. An arcuate face 120 is formed in each slide notch 12 and a central angle corresponding to the arcuate face 120 is less than 180 degrees.

The bracket assembly 7 includes a fixed bracket 13 and a bar member 14. The fixed bracket 13 adopts a substantially U-shaped configuration with a bottom plate 15 and a pair of flanges 16 extending upwardly from opposite edges of the bottom plate 15. The bottom plate 15 defines a first slot 17. Each flange 16 defines a latching slot 18 and through holes 28 on opposite sides of the latching slot 18. The bar member 14 extends between the flanges 16 and is tightly latched in the latching slots 18. Bolts 30 extend between the flanges 16 and through the through holes 28 to fix the bracket assembly 7 (and therefore the guide shoe 5) to the gear box 2.

The bar member 14 defines a second slot 19. A slide pin 9 extends between the first slot 17 and the second slot 19. The width of the first slot 17 and the width of the second slot 19 are substantially equal to the diameter of the slide pin 9. Accordingly, the slide pin 9 can only move along the length of the bar member 14 in a direction substantially perpendicular to the direction of receiprocative movement of the saw blade 3.

The push plate 8 defines a receiving slot 20. The slide pin 9 extends through the receiving slot 20 and engages a coaxial slide notch 12. The receiving slot 20 includes a first receiving portion 21 and a second receiving portion 22 communicating with the first receiving portion 21 in a substantially L-shaped configuration. The length of the first receiving portion 21 in the direction of movement of the slide pin 9 (*ie* substantially perpendicular to the direction of reciprocative movement of the saw blade 3) is greater than the diameter of the slide pin 9 and greater than the sum of the diameter of the slide pin 9 plus the depth of the slide notch 12. The length of the second receiving portion 22 in the direction of movement of the slide pin 9 (*ie* substantially perpendicular to the direction of movement of the saw blade 3) is substantially equal to the diameter of the slide pin 9.

The push plate 8 has a guide block 29 on its upper face to guide the slide pin 9. An arcuate guiding face 210 is formed in the first receiving portion 21 adjacent to the guide block 29. A central angle corresponding to the arcuate guiding face 210 is less than 180 degrees.

Adjacent to one end, the bottom plate 15 defines a third slot 24 which is closed and a first projection 25 projects inwardly from an edge of the third slot 24. A second projection 26 projects outwardly from an end of the push plate 8. A torsion spring 10 is received in the third slot 24 and its first end is fixed to the first projection 25 and its second end is fixed to the second projection 26.

The guide shoe 5 has a first working state (or locking state) and a second working state (or release state). When the guide shoe 5 is in the first working state, the slide pin 9 is latched in the second receiving portion 22 of the receiving slot 20 and engaged with the slide notch 12 at the same time so that the guide plate 4 is immovable with respect to the saw blade 3. When the guide shoe 5 is in the second working state, the slide pin 9 is fully disengaged from the slide notch 12 and relocates onto a joining face 122 between adjacent slide notches 12 so that the guide plate 4 is freely adjustable.

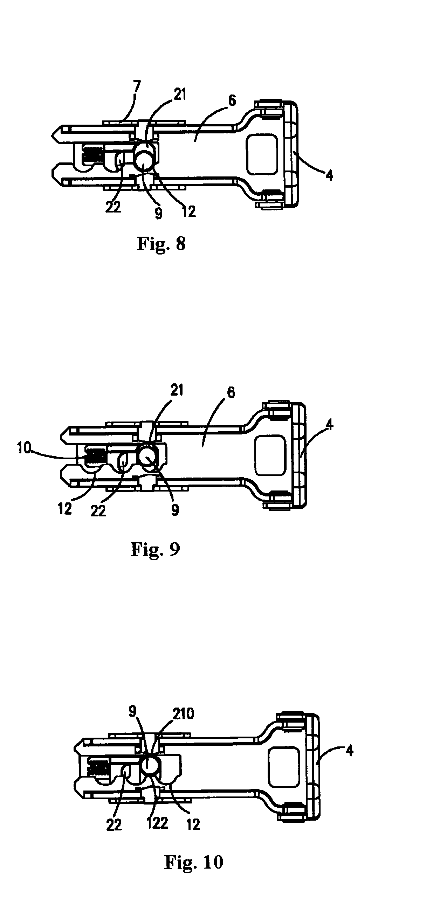

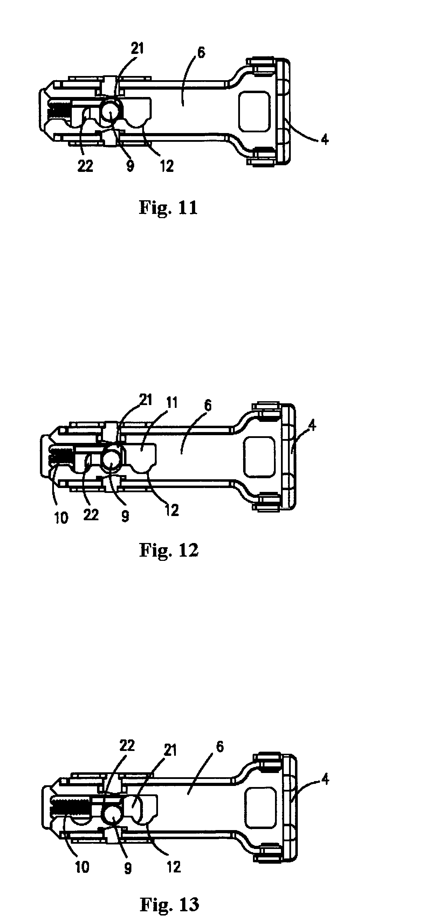

The adjustment of the guide shoe 5 between the first and second working states will now be described in detail with reference to Figures 8 to 13. When the guide shoe 5 is to be adjusted from the first working state, the user pushes the push plate 8 inwardly (Figure 8) against the force of the spring 10 and the first receiving portion 21 moves into contact with the slide pin 9. The user then pulls the support plate 6 laterally (whilst still pushing the push plate 8) and the slide pin 9 moves laterally towards the joint face 122 between adjacent slide notches 12 via the drive of the slide notch 12 (Figure 9) so that the guide shoe 5 adopts the second working state (or release state). In this state, the slide pin 9 has reached the arcuate pushing face 210 of the first receiving portion 21 (Figure 10). Referring to Figure 11, when the push plate 8 and the support plate 6 are released by the user, the slide pin 9 is pressed laterally by the slanted force of the pushing face 210 and the push plate 8 moves laterally (Figure 12) towards an adjacent slide notch 12. Finally, the slide pin 9 is pushed to a position between the adjacent slide notch 12 and the position block 29 and at the same time is latched into the second receiving portion 22 of the push plate 8 (Figure 13) under the force of the torsion spring 10. In this way, the guide shoe 5 of the present invention achieves quick adjustment and returns to the first working state.

## Claims

1. A power saw comprising;
a clam shell housing (1),
a gear box (2) disposed in the clam shell housing (1),
a saw blade (3) attached to the gear box (2) for axially reciprocative movement,
a guide plate (4) for guiding the saw blade (3) and
a guide shoe (5) including:
a bracket assembly (7) fixed relative to the gear box (2),
a support plate (6) which is partially nested within the bracket assembly (7) and which is pivotally connected to the guide plate (4), the support plate (6) defining axially a plurality of slide notches (12),
a push plate (8) slidably disposed between the support plate (6) and the bracket assembly (7), the push plate (8) defining a receiving slot (20),
a slide pin (9) extending through the receiving slot (20), the slide pin (9) being selectively engageable with the plurality of slide notches (12), and
a resilient member (10) disposed between the bracket assembly (7) and the push plate (8),
wherein the guide shoe (5) has a first working state in which the slide pin (9) is received in the receiving slot (20) and a first of the slide notches (12) so that the guide plate (4) is immovable with respect to the saw blade (3) and a second working state in which the slide pin (9) is disengaged from the first of the slide notches (12) and the guide plate (4) is moveable with respect to the saw blade (3).

2. A power saw as claimed in claim 1 wherein the bracket assembly (7) includes a fixed bracket (13) and a bar member (14).

3. A power saw as claimed in claim 2 further comprising:
a joining member (30) for fixing the fixed bracket (13) to the gear box (2),
wherein the fixed bracket (13) defines a first slot (17) elongated in a direction perpendicular to a direction of the reciprocative movement of the saw blade (3) and the bar member (14) defines a second slot (19) elongated in a direction perpendicular to a direction of the reciprocative movement of the saw blade (3), and wherein a first end and a second end of the slide pin (9) are mounted in the first slot (17) and the second slot (19) respectively whereby to be slidable only in the direction perpendicular to the direction of the reciprocating movement of the blade.

4. A power saw as claimed in any preceding claim wherein an arcuate face (120) is formed in the slide notch (12) and a central angle corresponding to the arcuate face (120) is less than 180 degrees.

5. A power saw as claimed in any preceding claim wherein the support plate (6) defines an elongate slot (11) in communication with each slide notch (12).

6. A power saw as claimed in any preceding claim wherein the receiving slot (20) includes a first receiving portion (21) and a second receiving portion (22) in communication with the first receiving portion (21), wherein a length of the first receiving portion (21) in the direction of movement of the slide pin (9) is greater than a diameter of the slide pin (9) and a length of the second receiving portion (22) in the direction of movement of the slide pin (9) is substantial equal to the diameter of the slide pin (9).

7. A power saw as claimed in claim 6 wherein an arcuate pushing face (210) is formed in the first receiving portion (21) and a central angle corresponding to the arcuate pushing face (210) is less than 180 degrees.

8. A power saw as claimed in claim 6 or 7 wherein in the first working state the slide pin (9) is latched into the second receiving portion (22) and the slide notch (12) at the same time.

9. A power saw as claimed in any of claims 6 to 8 wherein the length of the first receiving portion (21) in the direction of movement of the slide pin (9) is larger than the sum of the diameter of the slide pin (9) plus the depth of the slide notch (12).

10. A power saw as claimed in claim 9 wherein in the second working state the slide pin (9) is located on a joining face (122) between two adjacent slide notches (12).
